# EUROPEAN PATENT APPLICATION

(11) **EP 4 427 954 A1**
(43) Date of publication of application: **11.09.2024**
(21) Application number: 24158286.5
(22) Date of filing: 19.02.2024
(51) Int. Cl.: B60G 17/052, B60H 1/00, B60G 17/04

(54) **AIR SUSPENSION SYSTEM AND AIR CONDITIONING UNIT**

(30) Priority: 10.03.2023 US 202363489435 P
(71) Applicant: Apple Inc., Cupertino, CA 95014 (US)
(72) Inventor: CARTER, Troy A., Cupertino, CA 95014 (US)
(74) Representative: Lang, Johannes

(57) **Abstract**

A spring system includes a bladder, a pump in fluid communication with the bladder, and an air line coupled with the pump and configured to fluidly communicate with a thermal conditioning unit. The pump is configured to draw the air through the air line from the thermal conditioning unit and transmit the air to the bladder.

## Description

### CROSS-REFERENCE TO RELATED APPLICATION(S)

This application claims priority to and the benefit of U.S. Provisional Patent Application No. 63/489,435, filed March 10, 2023, the entire disclosure of which is hereby incorporated by reference herein for all purposes.

### TECHNICAL FIELD

This disclosure relates generally to the field of spring systems.

### BACKGROUND

A spring system may include an air supply that directs a flow of air to a spring. As examples, components such as fans, pumps, and compressors may be used by a spring system to direct the flow of air to the spring.

### SUMMARY

One aspect of the disclosure is a vehicle including an air spring configured to pneumatically bias a sprung mass relative to an unsprung mass and an air compressor in fluid communication with the air spring. The vehicle further includes an air conditioning unit including a housing. The housing defines an interior, an entrance opening configured to allow air to enter the interior, and an exit opening configured to allow the air to exit the interior and pass into a passenger compartment. The air conditioning unit further includes an evaporator disposed within the interior of the housing and configured to separate the interior into an entrance section and an exit section. The air is configured to flow into the entrance section from the entrance opening and across the evaporator from the entrance section to the exit section, with the evaporator configured to remove heat and humidity from the air. The housing has a port in fluid communication with the exit section of the interior and the air compressor, with the air compressor configured to transmit at least a portion of the air from the exit section of the interior and inflate the air spring.

In some implementations of the vehicle, the vehicle further includes a linear actuator configured to be coupled to the sprung mass and the unsprung mass, with the linear actuator configured to extend and contract to move the sprung mass relative to the unsprung mass.

In some implementations of the vehicle, the air spring defines an internal cavity configured to receive the air, with the linear actuator at least partially disposed within the internal cavity.

In some implementations of the vehicle, the housing defines a drain opening in fluid communication with the interior of the housing and disposed below the evaporator such that condensation that falls off the evaporator exits the housing through the drain opening.

In some implementations of the vehicle, the port is disposed above the drain opening and configured to direct the condensation through the drain opening and maintain the port for transmission of the air.

In some implementations of the vehicle, the vehicle further includes an air filter in fluid communication with the entrance section of the interior of the housing and configured to receive the air before the evaporator, wherein the air filter is configured to remove particulates from the air.

In some implementations of the vehicle, the vehicle further includes a suppressor disposed between, and in fluid communication with, the housing and the air compressor, and configured to reduce noise transmission into the housing generated from operation of the air compressor.

In some implementations of the vehicle, the air compressor further comprises a dryer configured to remove humidity from the air.

In some implementations of the vehicle, the dryer comprises a desiccant.

Another aspect of the disclosure is an air suspension system including an air spring configured to pneumatically bias a sprung mass relative to an unsprung mass, an air compressor in fluid communication with the air spring, and an air line coupled with the air compressor and configured to fluidly communicate with an air conditioning unit that removes heat and humidity from air. The air compressor is configured to draw the air through the air line from the air conditioning unit and transmit the air to the air spring to inflate the air spring.

In some implementations of the air suspension system, the air suspension system further includes a linear actuator configured to be coupled to the sprung mass and the unsprung mass, with the linear actuator configured to extend and contract to move the sprung mass relative to the unsprung mass.

In some implementations of the air suspension system, the air spring defines an internal cavity configured to receive the air, with the linear actuator at least partially disposed within the internal cavity.

In some implementations of the air suspension system, the air line includes a suppressor in fluid communication with the air compressor and configured to reduce noise transmission through the air line generated from operation of the air compressor.

In some implementations of the air suspension system, the air compressor further comprises a dryer configured to remove humidity from the air.

In some implementations of the air suspension system, the dryer comprises a desiccant.

Another aspect of the disclosure is an air inflation system including a bladder configured to be inflated, a pump in fluid communication with the bladder, and an air line coupled with the pump and configured to fluidly communicate with an air conditioning unit that removes heat and humidity from air. The pump is configured to draw the air through the air line from the air conditioning unit and transmit the air to the bladder to inflate the bladder.

In some implementations of the air inflation system, the air line includes a suppressor in fluid communication with the pump and configured to reduce noise transmission through the air line generated from operation of the pump.

In some implementations of the air inflation system, the pump further comprises a dryer configured to remove humidity from the air.

In some implementations of the air inflation system, the dryer comprises a desiccant.

In some implementations of the air inflation system, the pump further comprises a filter configured to remove particulates from the air.

### BRIEF DESCRIPTION OF THE DRAWINGS

FIG. 1 is a schematic top view illustration of a vehicle comprising an air conditioning unit and an air inflation system.
FIG. 2 is a schematic side view illustration of an example implementation of the air conditioning unit and the air inflation system.

### DETAILED DESCRIPTION

This disclosure is directed to an air inflation system of a vehicle.

An air inflation system can be configured as an air suspension system that pneumatically biases a sprung mass (e.g., a body of the vehicle) relative to an unsprung mass (e.g., a wheel of the vehicle). The air suspension system includes an air compressor that supplies air to the air spring for inflating the air spring. The air spring pneumatically biases sprung mass relative to the unsprung mass.

The vehicle described herein includes an air conditioning unit for providing cool and dry air to a passenger compartment of the vehicle. The air suspension system in fluid communication with the air conditioning unit such that air compressor supplies the air spring with air from the air conditioning unit. The reduced humidity of the air from the air conditioning unit reduces water buildup in the air spring, which can change the biasing characteristics of the air spring. Furthermore, the consistent air temperature from the air conditioning unit (in comparison to the temperature of the external air which may fluctuate) allow the air to be more accurately metered as it flows into the air spring. As a result, the ride height of the vehicle can be controlled with a greater degree of accuracy compared to ride height control in systems using external air having an inconsistent temperature. Moreover, a linear actuator may be disposed within the air spring to incorporate active suspension control. The linear actuator may include electronic components that are susceptible to humidity and heat (e.g., electrical shorts, corrosion, etc.), and these issues may be mitigated by use of air from the air conditioning unit.

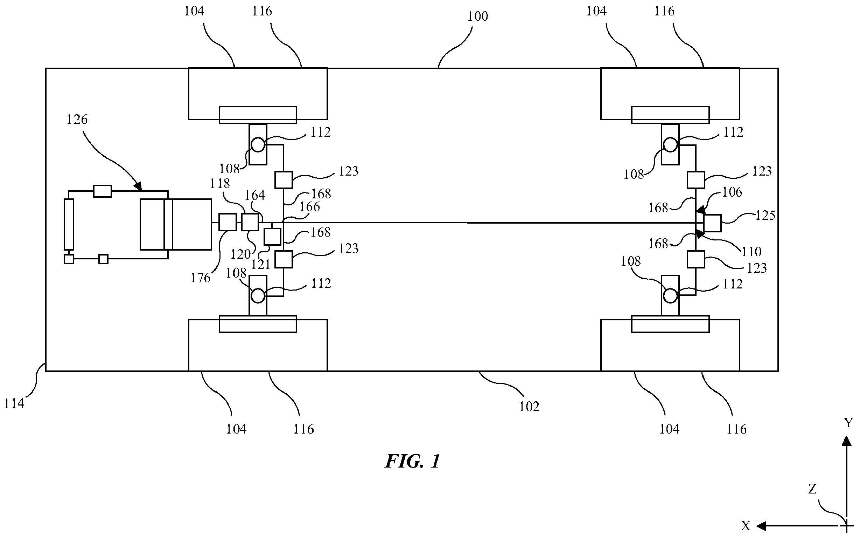

FIG. 1 is a schematic top view illustration of a vehicle 100. The vehicle 100 includes a body 102. The body 102 may be constructed of one or components, including (but not limited to) a frame, a subframe, a unibody, a monocoque, exterior body panels, interior body panels, and movable panels (e.g., doors, tailgate, hood, trunk lid, etc.). The vehicle 100 will be described with reference to a longitudinal direction X (e.g., fore-aft), a lateral direction Y (e.g., side to side), and an elevational direction Z (e.g., up-down). The vehicle 100 may be a road-going vehicle that is able to travel freely upon roadways and other surfaces. The vehicle 100 includes wheels 104 that are coupled to and support the body 102. Although four of the wheels 104 are shown, the vehicle 100 may utilize any number of wheels.

The vehicle 100 includes an air inflation system 106. The air inflation system 106 may comprise a bladder 108 configured to be inflated. In one example, the air inflation system 106 is configured as an air suspension system 110, with the bladder 108 configured as an air spring 112. The air spring 112 is a suspension component that is configured to pneumatically bias a sprung mass 114 relative to an unsprung mass 116. The air spring 112 may further function to reduce transmission of vibrations from the unsprung mass 116 to the sprung mass 114. Although a particular implementation of the air spring 112 is shown and described herein, it should be understood that the air spring 112 may be implemented according to a variety of known configurations.

The air spring 112 is disposed at the wheel 104 (e.g., four air springs 112 individually disposed at the four wheels 104). The air spring 112 controls vertical motion of the wheel 104 relative to the body 102, for example, to ensure contact between the wheel 104 and a surface of the roadway and to limit the influence of roadway conditions on undesirable movements of the body 102. The air spring 112 is a passive suspension component that biases the sprung mass 114 (i.e., the portion of the vehicle 100 that is supported by the air spring 112, such as the body 102) relative to the unsprung mass 116 (i.e., the portion of the vehicle 100 that is not supported by the air spring 112, such as the wheel 104). When inflated, the air spring 112 is filled with air, which is a compressible fluid. The air spring 112 may compress when a load is exerted on the air spring 112 (such as a sudden movement of the wheel 104 due to the roadway conditions) and expand when the load is removed, providing a bias. The volume of the air within the air spring 112 to adjust a ride height of the vehicle 100 (i.e., the distance the body 102 is spaced from the road surface). More specifically, increasing the volume of the air in the air spring 112 results in expansion of the air spring 112 that moves the wheel 104 and the body 102 away from each other in the elevational direction Z, increasing the ride height of the vehicle 100. Decreasing the volume of the air in the air spring 112 results in contraction of the air spring 112 that moves the wheel 104 and the body 102 toward one another in the elevational direction Z, decreasing the ride height of the vehicle 100.

Although the bladder 108 is configured as an air spring 112 in the example shown in the Figures, it is to be appreciated that the bladder 108 may be any component within the vehicle 100 that is capable of inflation. For example, the bladder 108 may be disposed within a seat that supports a passenger of the vehicle. Inflation of the bladder 108 within the seat may adjust the contours of the seat to provide varying support to the passenger (e.g., lumbar support).

The air inflation system 106 may comprise a pump 118 in fluid communication with the bladder 108. More specifically, with the air inflation system 106 configured as the air suspension system 110, the pump 118 is configured as an air compressor 120 in fluid communication with the air spring 112. More specifically, in the example shown in FIG. 1, the air compressor 120 is in fluid communication with each of the air springs 112 (e.g., the four air springs 112 individually disposed at the four wheels 104). The air inflation system 106 further includes a storage tank 121 in fluid communication (through a valve) with the air compressor 120 and with each of the air springs 112. The air inflation system 106 further includes an inlet valve 123 disposed at the air springs 112 (e.g., four inlet valves 123 individually disposed at the four air springs 112). The inlet valves 123 are in fluid communication with the storage tank and individually in fluid communication with the air springs 112, respectively. The air inflation system 106 further includes an outlet valve 125 in fluid communication with the air springs 112 (through the inlet valves 123). The air compressor 120 is configured to receive the air at atmospheric pressure, pressurize the air, and transmit the air to the storage tank 121. The inlet valves 123 may be actuated (individually or in any suitable combination) to deliver the air from the storage tank 121 to the respective air springs 112 to in inflate the respective air springs 112. To deflate one or more of the air springs 112, the outlet valve 125 and the respective inlet valves 123 are actuated to transmit the air out of the air springs 112, through the respective inlet valves 123, and out of the outlet valve 125. The air compressor 120 may be any suitable configuration for pressurizing the air, such as a rotary air compressor, a reciprocal air compressor, a centrifugal air compressor, etc. Furthermore, any number of air compressors 120 may be utilized with the air springs 112 (e.g., four air compressors 120 individually coupled with the four air springs 112).

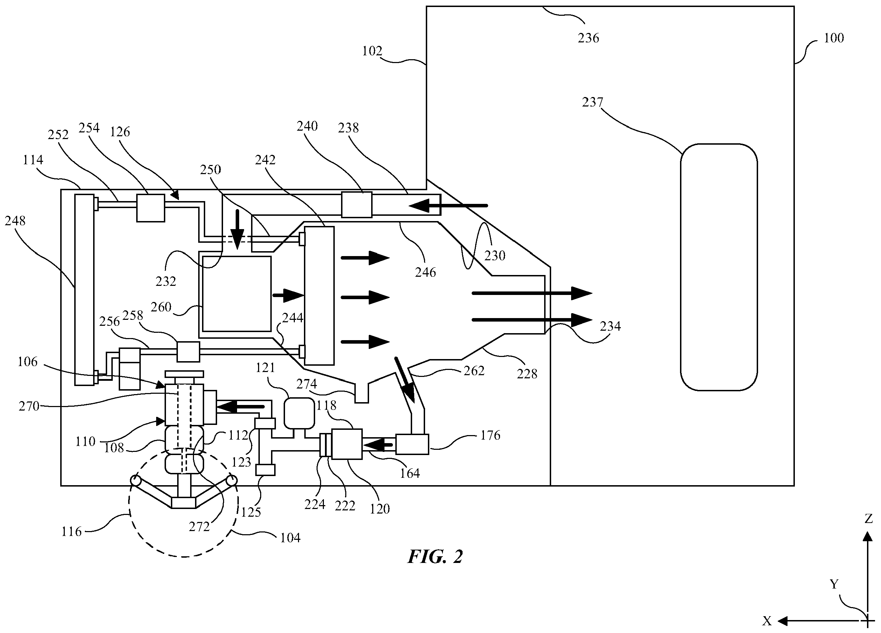

FIG. 2 is a schematic side view illustration of an example implementation of the air inflation system 106 (e.g., the air suspension system 110). In particular, one pump 118 (e.g., air compressor 120) and one bladder 108 (e.g., air spring 112) located at one wheel 104 is shown for demonstrative purposes. The pump 118 (e.g., the air compressor 120) may further comprise a dryer 222 configured to remove humidity from the air. The dryer 222 may comprise a desiccant, such as silica gel, activated alumina, molecular sieves, etc., which absorb and retain water and water vapor that is in the air. The pump 118 (e.g., the air compressor 120) may further comprise a filter 224 configured to remove particulates from the air, which can damage the pump 118 and the bladder 108. The filter 224 may be configured as a paper filter, carbon filter, etc., for removing the particulates.

As shown in FIG. 1, the vehicle 100 further includes an air conditioning unit 126. The air conditioning unit 126 includes a housing 228, as shown in FIG. 2. The housing 228 defines an interior 230, an entrance opening 232 configured to allow air to enter the interior 230, and an exit opening 234. The body 102 defines a passenger compartment 236 for carrying passengers 237. The exit opening 234 is configured to allow the air to exit the interior 230 of the housing 228 and pass into the passenger compartment 236.

As shown in FIG. 2, the vehicle 100 includes a duct 238 that is coupled to the entrance opening 232 and directs air from another location toward the entrance opening 232. In the example shown in FIG. 2, the duct 238 receives air from the passenger compartment 236. However, the duct 238 may be configured to receive air from any suitable location, including the exterior of the vehicle 100. The vehicle 100 further includes a blower 240 in fluid communication with the duct 238. The blower 240 is configured to generate a steady flow of the air through the duct 238 and into the interior 230 of the housing 228. The exit opening 234 is shown in FIG. 2 as being centrally located in the passenger compartment 236 and directing the air toward the passenger 237. However, the exit opening 234 may be configured to direct the air toward any suitable location within the passenger compartment 236, such as toward the windshield (i.e., defrost) or toward a floor of the passenger compartment 236. Furthermore, the housing 228 may include a diverter for directing the flow of air between one or more locations.

The air conditioning unit 126 further includes an evaporator 242 disposed within the interior 230 of the housing 228 and configured to separate the interior 230 into an entrance section 244 and an exit section 246. The air conditioning unit 126 is configured to receive air and remove heat and humidity from the air. The air is configured to flow into the entrance section 244 from the entrance opening 232 and across the evaporator 242 from the entrance section 244 to the exit section 246, with the evaporator 242 configured to remove heat and humidity from the air. More specifically, the air conditioning unit 126 may further include a condenser 248 in fluid communication along a circuit 250. Both the evaporator 242 and the condenser 248 are configured as heat exchangers. The circuit 250 includes a first section 252 having an air conditioning compressor 254 in fluid communication with the evaporator 242 and the condenser 248. The circuit 250 further includes a second section 256 having a metering valve 258 in fluid communication with the evaporator 242 and the condenser 248. A refrigerant (such as freon) flows through the circuit 250 such that the refrigerant flows into and out of the evaporator 242, the air conditioning compressor 254, the condenser 248, and the metering valve 258.

Following the path of the refrigerant around the circuit 250, the refrigerant flows into the evaporator 242 from the second section 256 of the circuit 250 as a low-pressure liquid. As the air passes through the evaporator 242, heat is absorbed by the refrigerant causing the refrigerant to change state from a liquid to a gas. The heat loss from the air results in water vapor in the air condensing on the evaporator 242, thus drying the air. The refrigerant passes into the first section 252 of the circuit 250 and to the air conditioning compressor 254 which increases the pressure of the refrigerant in the gas state. The refrigerant continues through the first section 252 of the circuit 250 to the condenser 248 where external air outside of the vehicle 100 passes through the condenser 248. The air removes heat from the refrigerant, causing the refrigerant cool and change state from a gas to a liquid. The refrigerant then flows through the second section 256 of the circuit 250 and into the metering valve 258. The metering valve 258 reduces the pressure of the refrigerant in the liquid state, making the refrigerant better suited for absorbing heat as the refrigerant passes through the remaining portion of the second section 256 of the circuit 250 and back into the evaporator 242, where the process starts again.

The vehicle 100 may further include an air filter 260 in fluid communication with the entrance section 244 of the interior 230 of the housing 228 and configured to receive the air before the evaporator 242. The air filter 260 is configured to remove particulates from the air. The air filter 260 may be configured as a paper air filter, carbon air filter, etc., for removing the particulates.

Although not shown, the vehicle 100 may include a heater in fluid communication with the exit section 246 of the interior 230 of the housing 228. The heater receives at least a portion of the air from the exit section 246 and heats the air. The housing 228 may include a blend door that meters the amount of cool air from the evaporator 242 and the hot air from the heater that is delivered to the passenger compartment 236.

As shown in FIGS. 1 and 2, the air conditioning unit 126 is in fluid communication with the air compressor 120. The air compressor 120 is configured to transmit the air from the air conditioning unit 126 and inflate the air spring 112. More specifically, the housing 228 has a port 262 (as shown in FIG. 2) in fluid communication with the exit section 246 of the interior 230 and the air compressor 120, with the air compressor 120 configured to transmit at least a portion of the air from the exit section 246 of the interior 230 and inflate the air spring 112. In the example shown in FIG. 2, a portion of the air in the exit section 246 flows through the port 262 to the air compressor 120 while the remaining air in the exit section 246 flows through the exit opening 234 of the housing 228 into the passenger compartment 236. However, the housing 228 could be configured such all of the air in the exit section 246 passes through the port 262 to the air compressor 120.

As shown in FIGS. 1 and 2, the air inflation system 106 may further include an air line 164 coupled with the pump 118 (e.g., the air compressor 120) and configured to fluidly communicate with the air conditioning unit 126 that removes heat and humidity from air. More specifically, the air line 164 shown in FIG. 2 is coupled to the port 262. The air line 164 may be tube, pipe, or any other suitable component for transmitting the air therethrough. As shown in FIG. 1, the air line 164 may include a common portion 166 that extends from the port 262, with the air compressor 120 and the storage tank 121 in fluid communication with the common portion 166. The air line 164 may further include four branch portions 168 that extend off the common portion 166 individually to the four air springs 112. The pump 118 (i.e., the air compressor 120) is configured to draw the air through the air line 164 from the air conditioning unit 126 and transmit the air to the bladder 108 (i.e., the air spring 112) to inflate the bladder 108. More specifically, in the example shown in the Figures, the common portion 166 of the air line 164 is coupled with the air compressor 120 and configured to fluidly communicate with the air conditioning unit 126. The air compressor 120 is configured to draw the air through the common portion 166 of the air line 164 from the air conditioning unit 126 and transmit the air to the storage tank 121. The inlet valves 123 selectively open to transmit the air from the storage tank 121 into the respective branch portions 168 of the air line 164 and into the respective air springs 112 for inflating the respective air springs 112. Therefore, each of the air springs 112 receive the air from air conditioning unit 126, which has been cooled and dried by the evaporator 242.

The reduced humidity of the air from the air conditioning unit 126 reduces water buildup in the air spring 112. Water is an incompressible fluid. Water disposed within the air spring 112 changes the biasing characteristics of the air spring 112. Moreover, if the air spring 112 were to become completely filled with water, the air spring 112 may lose all biasing characteristics.

Furthermore, the air that is cooled by the air conditioning unit 126 is consistent in temperature in comparison to the temperature of the external air outside of the vehicle 100 (which may vary between seasons and the location of the vehicle 100). The volume of a gas (such as the air) varies depending on the temperature (i.e., a gas occupies more volume as the temperature increases). Therefore, since the air from the air conditioning unit 126 has a consistent temperature, it may be more accurately metered as it flows into the air spring 112 to allow accurate control of the ride height of the vehicle 100.

As shown in FIG. 2, the air suspension system 110 may further include a linear actuator 270 configured to be coupled to the sprung mass 114 and the unsprung mass 116. The linear actuator 270 is configured to extend and contract to move the sprung mass 114 relative to the unsprung mass 116. As such, the linear actuator 270 may be configured as an active suspension component that provides positive and negative displacement of the wheel 104 relative to the body 102. More specifically, the linear actuator 270 may move the wheel 104 up and down relative to the body 102 to reduce transmission of the motion of the wheel 104 to the body 102 and provide an improved ride to the body 102.

In the example shown in FIG. 2, the air spring 112 defines an internal cavity 272 configured to receive the air, with the linear actuator 270 at least partially disposed within the internal cavity 272. The disposition of the linear actuator 270 within the internal cavity 272 of the air spring 112 makes the linear actuator 270 susceptible to the air within the cavity. More specifically, the linear actuator 270 may include electronic component that are negatively affected by humidity and heat (e.g., electrical shorts, corrosion, etc.). Therefore, the reduced heat and humidity of the air received from the air conditioning unit 126 improves operating conditions for the linear actuator 270 within the air spring 112.

The housing 228 may further define a drain opening 274 in fluid communication with the interior 230 of the housing 228 and disposed below the evaporator 242 such that condensation that falls off the evaporator 242 exits the housing 228 through the drain opening 274. Moreover, the housing 228 shown in FIG. 2 is configured such that the drain opening 274 is located at the lowest point of the interior 230, causing the condensation to flow to the drain opening 274 and exit the housing 228. The drain opening 274 may be in fluid communication with an exterior of the vehicle 100 such that the condensation flows out of the housing 228 to the exterior.

The port 262 is disposed above the drain opening 274 and configured to direct the condensation through the drain opening 274 and maintain the port 262 for transmission of the air. More specifically, the condensation is drawn by gravity to move toward the lowest point of the housing 228. Since the port 262 is disposed above the drain opening 274, the condensation is collected in the drain opening 274 and prevented from entering the port 262 and subsequently the air spring 112.

As shown in FIGS. 1 and 2, the air line 164 may include a suppressor 176. The suppressor 176 is in fluid communication with the pump 118 and is configured to reduce noise transmission through the air line 164 generated from operation of the pump 118. More specifically, in the example shown in the Figures, the suppressor 176 is disposed between, and in fluid communication with, the housing 228 and the air compressor 120, and configured to reduce noise transmission into the housing 228 generated from operation of the air compressor 120. As shown in FIG. 1, the suppressor 176 may be a single component in fluid communication with the each of the four air springs 112. However, the vehicle 100 may utilize multiple suppressors 176 (e.g., four suppressors 176 individually corresponding with the four air springs 112). The suppressor 176 may be configured as one or more of a sound absorbing baffle, a wave cancellation muffler, a resonance (Helmholtz) muffler, etc.

The air inflation system 106 may be implemented in the context of a system, such as the vehicle 100, that includes gathering and use of data available from various sources for use in controlling operation of the vehicle 100. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows operation of the vehicle 100 according to user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, information may be determined each time the system is used, and without subsequently storing the information.

## Claims

1. An air suspension system comprising:
an air spring configured to pneumatically bias a sprung mass relative to an unsprung mass;
an air compressor in fluid communication with the air spring; and
an air line coupled with the air compressor and configured to fluidly communicate with an air conditioning unit that removes heat and humidity from air,
wherein the air compressor is configured to draw the air through the air line from the air conditioning unit and transmit the air to the air spring to inflate the air spring.

2. The air suspension system of claim 1, further comprising a linear actuator configured to be coupled to the sprung mass and the unsprung mass, with the linear actuator configured to extend and contract to move the sprung mass relative to the unsprung mass.

3. The air suspension system of claim 2, wherein the air spring defines an internal cavity configured to receive the air, with the linear actuator at least partially disposed within the internal cavity.

4. The air suspension system of any of claims 1-3, wherein the air line includes a suppressor in fluid communication with the air compressor and configured to reduce noise transmission through the air line generated from operation of the air compressor.

5. The air suspension system of any of claims 1-4, wherein the air compressor further comprises a dryer configured to remove humidity from the air.

6. The air suspension system of claim 5, wherein the dryer comprises a desiccant.

7. The air suspension system of any of claim 1-6, further comprising a storage tank in fluid communication with the air compressor and with the air spring, wherein the air compressor is configured to receive the air at atmospheric pressure, pressurize the air, and transmit the air to the storage tank.

8. The air suspension system of claim 7, further comprising an inlet valve in fluid communication with the storage tank and the air spring, with the inlet valve configured to be actuated to deliver the air from the storage tank to the air spring to inflate the air spring.

9. The air suspension system of claim 8, further comprising an outlet valve in fluid communication with the air spring through the inlet valve and configured to deflate the air spring, wherein the outlet valve is configured to be actuated with the inlet valve to transmit the air out of the air spring, through the inlet valve, and out of the outlet valve.

10. A vehicle comprising:
the air suspension system, the sprung mass, the unsprung mass, and the air conditioning unit of any of claims 1-9, wherein the air conditioning unit comprises:
a housing defining an interior, an entrance opening configured to allow air to enter the interior, and an exit opening configured to allow the air to exit the interior and pass into a passenger compartment; and
an evaporator disposed within the interior of the housing and configured to separate the interior into an entrance section and an exit section, with the air configured to flow into the entrance section from the entrance opening and across the evaporator from the entrance section to the exit section, with the evaporator configured to remove heat and humidity from the air,
wherein the housing has a port in fluid communication with the exit section of the interior and the air compressor, with the air compressor configured to transmit at least a portion of the air from the exit section of the interior and inflate the air spring.

11. The vehicle of claim 10, wherein the housing defines a drain opening in fluid communication with the interior of the housing and disposed below the evaporator such that condensation that falls off the evaporator exits the housing through the drain opening.

12. The vehicle of claim 11, wherein the port is disposed above the drain opening and configured to direct the condensation through the drain opening and maintain the port for transmission of the air.

13. The vehicle of any of claims 10-12, further comprising an air filter in fluid communication with the entrance section of the interior of the housing and configured to receive the air before the evaporator, wherein the air filter is configured to remove particulates from the air.

14. The vehicle of any of claims 10-13, further comprising a duct that is coupled to the entrance opening and configured to direct air from the passenger compartment toward the entrance opening.

15. The vehicle of claim 14, further comprising a blower in fluid communication with the duct and configured to generate a flow of the air through the duct and into the interior of the housing.
